# FASCICULE DE BREVET EUROPEEN

(11) **EP 1 854 357 B1**
(45) Date de publication et mention de la délivrance du brevet: **14.03.2012**
(21) Numéro de dépôt: 06290779.5
(22) Date de dépôt: 11.05.2006
(51) Int. Cl.: A21B 1/22

(54) **DISPOSITIF DE CUISSON, NOTAMMENT DE PAIN, ET FOUR COMPORTANT UN TEL DISPOSITIF**
BACKVORRICHTUNG, INSBESONDERE FÜR BROT, UND OFEN MIT EINER SOLCHEN VORRICHTUNG
BAKING DEVICE PARTICULARLY FOR BREAD AND OVEN COMPRISING SAID DEVICE

(43) Date de publication de la demande: 14.11.2007
(73) Titulaire: BONGARD (S.A.), F-67810 Holtzheim (FR)
(72) Inventeur: Weimar, Eric, 67400 Illkirch (FR); Debes, Jean-Claude, 67200 Strasbourg (FR)
(74) Mandataire: Merckling, Norbert

(56) Documents cités:
- CH-A- 87 556
- CH-A- 87 958
- CH-A- 89 549
- CH-A- 195 061
- CH-A- 337 161
- DE-C- 532 389
- FR-A- 2 740 660
- FR-A1- 2 425 804
- GB-A- 469 250

## Description

La présente invention se rapporte au domaine technique général des fours de cuisson, et plus particulièrement au domaine technique des fours à pain.

Ces derniers présentent des conceptions et des formes particulières influençant de façon plus ou moins prononcée les résultats de cuisson. Ces formes particulières des fours sont souvent intimement liés à la région d'utilisation.

On connaît ainsi à titre d'exemple des fours à pain dont la chambre de cuisson présente un grand volume, permettant d'obtenir un résultat de cuisson déterminé, notamment dans l'aspect et dans l'épaisseur de la croûte du pain. Ces fours sont en général construits avec des briques réfractaires et sont chauffés au feu de bois.

Avec l'évolution technique et en particulier l'utilisation d'éléments chauffants électriques, les fours à pain ont été plus ou moins standardisés dans bon nombre de régions. Les boulangeries actuelles sont ainsi équipées avec un four comportant une superposition de chambres de cuisson, obturables chacune par un volet pivotant. Chacune des chambre est chauffée individuellement par des éléments chauffants électriques.

Il est ainsi connu de réaliser un dispositif de cuisson destiné notamment à la cuisson du pain, comportant :
- au moins une chambre de cuisson délimitée par une sole, deux parois latérales, une paroi arrière et un volet pivotant mobile entre une position d'ouverture et une position de fermeture d'un accès frontal à la chambre de cuisson,
- des éléments chauffants de sole et de voûte,
- la sole comportant une dalle de cuisson sur laquelle sont disposés les articles destinés à la cuisson,
- et la voûte comportant au moins un orifice d'évacuation des buées de cuisson.

Ce type de dispositif de cuisson présente cependant un certain nombre d'inconvénients. En effet, les dispositifs de cuisson existants, notamment dans des fours comportant une superposition de chambres de cuisson, présentent une chambre de cuisson de volume réduit et sensiblement parallélépipédique. Ces chambres de cuisson présentent ainsi une hauteur limitée, juste suffisante pour l'introduction et l'évacuation du pain. On obtient en général une texture et un aspect extérieur des articles et notamment du pain déterminés ainsi qu'une épaisseur de croûte limitée, correspondant aux pains et aux baguettes de pain que l'on connaît actuellement.

Du fait de l'apparition de buées de cuisson restant en contact avec les articles ou avec le pain pendant des durées prolongées dans la chambre de cuisson, il devient difficile de s'écarter des résultats de cuisson connus actuellement, pour obtenir des pains avec une croûte plus épaisse et une texture mate que l'on pourrait obtenir par exemple avec des fours de très grands volumes tels qu'on les connaît en Italie du Sud. Une telle croûte présente une épaisseur d'environ 1cm et est dépourvue de brillance.

L'utilisation de tels fours à grand volume n'est plus envisageable à l'heure actuelle sur un plan industriel et économique.

Le document CH 87 556 décrit un four destiné à la cuisson du pain.

Le but de la présente invention vise ainsi à réaliser un dispositif de cuisson permettant de par sa conformation d'obtenir des pains ou autres articles de cuisson dont l'aspect et la texture ou la qualité se démarque de ce que l'on connaît habituellement et de ce que l'on est capable de faire avec des fours à pain existants et fabriqués actuellement.

Un but complémentaire de la présente invention vise à réaliser un dispositif de cuisson ne présentant pas les inconvénients mentionnés ci-dessus et pouvant être intégré dans un four actuel comportant par exemple une superposition de chambres de cuisson. Un tel dispositif de cuisson doit être réalisable de préférence en effectuant des adaptations sur des fours existants.

Selon l'invention, le dispositif comporte d'une part une zone de cantonnement des buées de cuisson dans laquelle débouche l'orifice d'évacuation, ladite zone de cantonnement étant localisée entre la voûte et une paroi supérieure située au-dessus de ladite voûte, et d'autre part un parement minéral recouvrant à l'intérieur de la chambre de cuisson au moins partiellement les parois latérales et la voûte. Par parement minéral il convient d'entendre tout revêtement minéral rigide susceptible d'être fixé sur ou contre des parois et dont les propriétés physiques permettent de produire un rayonnement thermique le plus proche possible du rayonnement émis par des briques réfractaires utilisées dans des fours maçonnés traditionnels.

Avec le dispositif conforme à l'invention, on peut ainsi s'affranchir des inconvénients liés à une chambre de cuisson de dimensions trop réduites telles qu'on les connaît dans les fours actuels. Le dispositif selon l'invention permet ainsi d'obtenir des résultats de cuisson que l'on ne pourrait pas atteindre avec les fours actuels dans lesquels les articles destinés à la cuisson restent de façon prolongée en contact avec les buées de cuisson.

La zone de cantonnement, située au-dessus de la chambre de cuisson favorise l'éloignement rapide des buées issues de la cuisson de l'article à cuire. Une fois arrivées dans la zone de cantonnement, les buées peuvent s'échapper par un effet de tirage naturel ou de convection naturelle.

On obtient ainsi un avantage complémentaire dans la mesure où les pertes caloriques sont substantiellement réduites par rapport aux pertes caloriques des fours actuels disposant d'une extraction forcée des buées, par exemple par ventilation.

A titre d'exemple, le dispositif conforme à l'invention comporte une pluralité d'orifices d'évacuation. Ces derniers sont par exemple agencés sous forme de passages à la périphérie de la voûte.

Les éléments chauffants sont des résistances électriques. Les résistances électriques de voûte s'étendent sensiblement horizontalement et dans le bas de la zone de cantonnement.

Selon un exemple de réalisation, la zone de cantonnement comporte un moyen d'évacuation des buées de cuisson. Ce moyen d'évacuation est par exemple une ouverture d'évacuation ménagée dans la paroi supérieure du dispositif.

Selon un exemple de réalisation, la paroi arrière est également recouverte à l'intérieur de la chambre de cuisson au moins partiellement avec un parement minéral.

Selon un exemple de réalisation, le parement minéral fixé en voûte comporte un assemblage ou une juxtaposition de plaques modulaires, lesquelles cachent les éléments chauffants. Les orifices d'évacuation sont alors agencés sous forme de passages à la périphérie des plaques modulaires du parement minéral de la voûte. Les articles ou produits à cuire ne sont ainsi pas soumis directement au rayonnement infrarouge pénétrant émis par les résistances électriques constitutives des éléments chauffants. Cela favorise l'obtention d'une croûte épaisse car l'énergie est davantage concentrée en surface. L'évaporation d'eau plus localisée en surface contribue à la formation d'une croûte plus épaisse.

Selon un exemple de réalisation, le parement minéral est constitué de fibrociment minéral. Ce matériau présente une excellente résistance mécanique à des températures comprises entre 250°C et 350°C.

Le dispositif conforme à l'invention peut comporter une pluralité d'orifices d'évacuation débouchant dans la zone de cantonnement.

La présente invention concerne également un four comportant au moins un dispositif de cuisson tel que décrit ci-dessus.

En particulier, l'invention concerne un four comportant plusieurs chambres de cuissons superposées et au moins un dispositif de cuisson tel que décrit ci-dessus.

D'autres caractéristiques et avantages ressortiront également de la description détaillée figurant ci-après en référence aux dessins annexés à titre d'exemple non limitatif, dans lesquels :
- la figure 1 est une représentation en perspective partielle d'un exemple de réalisation du dispositif de cuisson conforme à l'invention ;

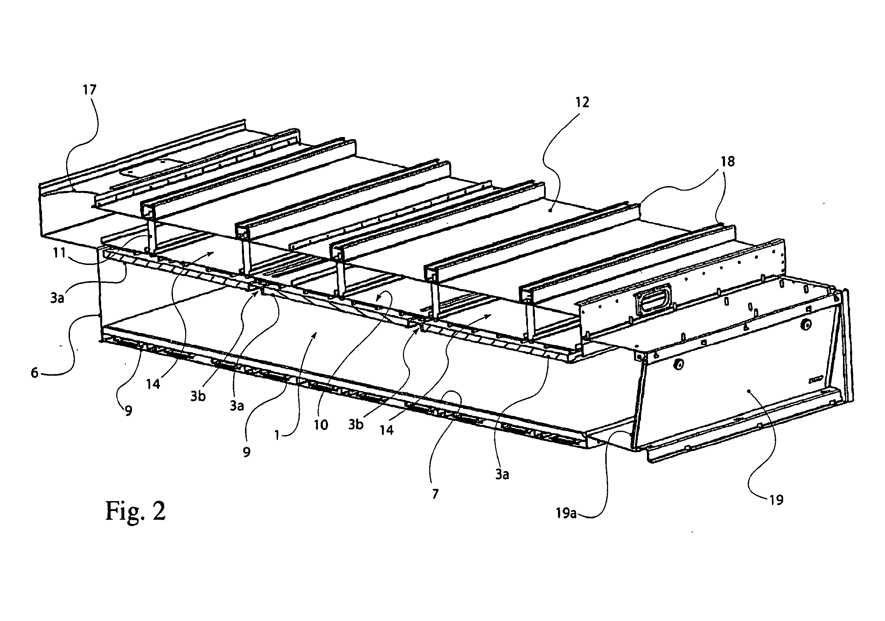

- la figure 2 est une vue en perspective et en coupe longitudinale du dispositif de la figure 1 ;
- la figure 3 est une vue frontale d'une coupe transversale d'un dispositif de cuisson conforme à l'invention;
- la figure 4 est une vue latérale d'une coupe longitudinale d'un dispositif de cuisson conforme à l'invention.

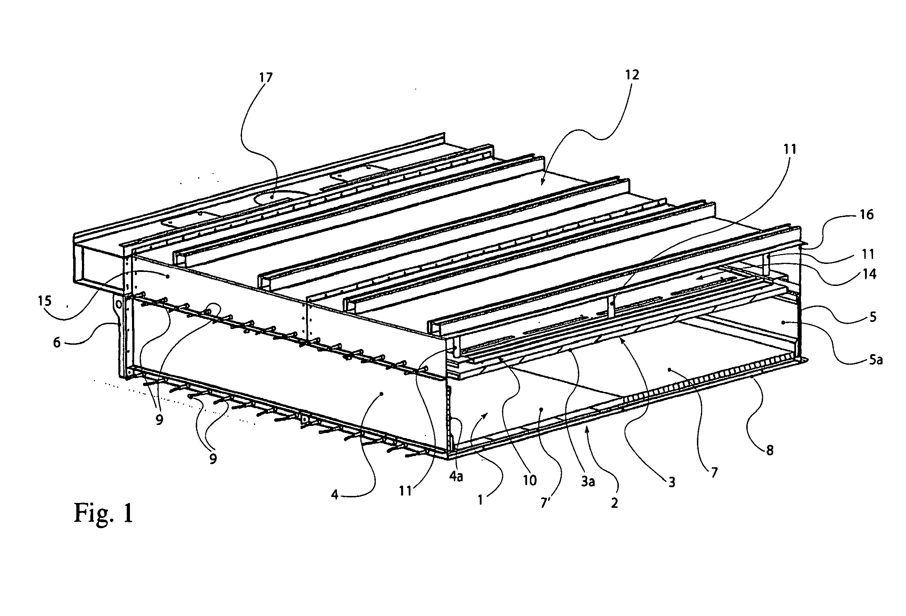

La figure 1 décrit un exemple de réalisation d'un dispositif conforme à l'invention. Le dispositif est représenté seul et dépourvu de tout habillage extérieur. On peut ainsi à titre d'exemple compléter une superposition de chambres de cuisson telles qu'on les connaît dans des fours classiques avec un dispositif conforme à l'invention.

Le dispositif de cuisson comporte une chambre de cuisson (1) délimitée par une sole (2), une voûte (3) et latéralement par des parois latérales (4) et (5). Une paroi arrière (6) réalise le fond de la chambre de cuisson (1).

La chambre de cuisson (1) est délimitée extérieurement par des parois métalliques. La sole (2) comporte également une dalle de cuisson (7) réalisée dans une matière minérale, par exemple en fibrociment.

C'est sur cette dalle de cuisson (7) que reposent les articles, notamment la pâte destinée à la cuisson. Pour des raisons de construction et de facilité d'assemblage la dalle de cuisson (7) peut être réalisée en deux ou en plusieurs parties tel que cela est représenté à la figure 1.

La sole (2) comporte également une paroi métallique (8) s'étendant sous la dalle de cuisson (7) et dans ou sur laquelle sont agencés des éléments chauffants (9) du type résistances électriques.

La voûte (3) comporte également un parement minéral (3a) derrière lequel sont agencés les éléments chauffants (9). Le parement minéral (3a) est par exemple constitué d'un assemblage ou d'une juxtaposition de plaques modulaires cachant les éléments chauffants (9) et fixés sur une structure métallique (10). Cette dernière est de préférence fixée par l'intermédiaire de goujons (11) ou tout autre moyen de fixation à une paroi supérieure (12) de manière à délimiter un espace intérieur entre la voûte (3) et la paroi supérieure (12). La paroi supérieure (12) est également surmontée de traverses de rigidification (18) sur lesquelles sont fixés les goujons (11). Des prolongements latéraux (15) et (16) des parois latérales respectives (4) et (5) permettent de confiner l'espace intérieur au-dessus de la voûte (3), ledit espace intérieur constituant ainsi une zone de cantonnement (14) des buées de cuisson. Par zone de cantonnement (14) il convient d'entendre tout volume ou espace clos en communication avec la chambre de cuisson (1) vers laquelle sont amenées les buées issues de la cuisson. Ces dernières ne restent donc pas en contact prolongé avec les articles à cuire dans la chambre de cuisson (1).

Des passages ou des orifices d'évacuation (3b) ménagés dans la voûte (3) et en particulier dans le parement minéral (3a) associé à la voûte (3) permettent aux buées de cuisson d'être évacuées rapidement vers la zone de cantonnement (14). Les buées de cuisson s'acheminant dans cette zone de cantonnement (14) sont de préférence en contact direct avec les éléments chauffants (9) qui y sont disposés. On obtient ainsi un assèchement au moins partiel des buées de cuisson.

La zone de cantonnement (14) est par exemple reliée à un moyen d'évacuation (17) des buées de cuisson, et ce par l'intermédiaire d'une ouverture ménagée dans la paroi supérieure (12). L'évacuation se fait de façon naturelle, sans moyen d'extraction du type ventilation.

Les parois latérales (4) et (5) sont également recouvertes à l'intérieur de la chambre de cuisson (1), d'un parement minéral (4a, 5a) à l'instar de la voûte (3).

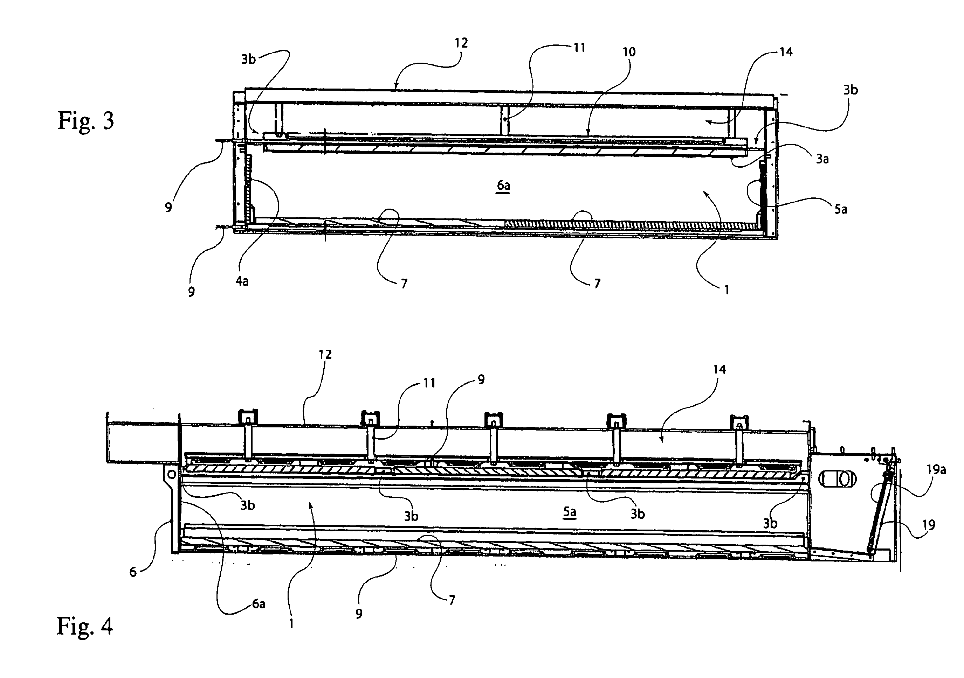

A titre d'exemple, la paroi arrière (6) peut également être pourvue d'un parement minéral correspondant (6a) à l'intérieur de la chambre de cuisson (1). On pourra se reporter par exemple à la figure 4.

Le dispositif de cuisson comporte également un volet pivotant mobile (19), entre une position d'ouverture et une position de fermeture d'un accès frontal à la chambre de cuisson (1). Ce volet pivotant (19) peut également selon une variante de réalisation être pourvu sur sa face interne d'un parement minéral (19a). Les parements minéraux (4a, 5a, 6a et 19a) présentent par exemple une épaisseur comprise entre 20 mm et 25 mm.

La figure 3 représente selon une vue frontale un dispositif de cuisson conforme à l'invention en coupe transversale. L'évacuation des buées de cuisson peut avantageusement se faire à la périphérie du parement minéral (3a) de la voûte (3). La structure métallique (10) permet en outre une fixation efficace des plaques rigides minérales constituant le parement minéral (3a) de la voûte (3). La fixation des plaques minérales, constituant le parement minéral (3a), se fait par tous moyens connus sur la structure métallique (10). Le ou les parements minéraux (3a) de la voûte (3) sont par exemple posés sur des supports métalliques. Ces derniers sont fixés par vissage sur la structure métallique (10).

Les parements minéraux (4a, 5a, 6a) sont par exemple réalisés en fibrociment ou en tout autre matériau minéral permettant la réalisation de plaques rigides et supportant des températures élevées.

La figure 4 représentant une coupe longitudinale d'un exemple de réalisation d'un dispositif de cuisson conforme à l'invention représente une chambre de cuisson (1) dont le volume interne est sensiblement identique à celui que l'on connaît dans les chambres de cuisson de fours à pain actuels. La zone de cantonnement (14) des buées permettant d'influencer substantiellement la cuisson en association avec les parement minéraux (3a, 4a, 5a, 6a), présente un encombrement réduit par rapport à l'encombrement d'un four traditionnel permettant d'obtenir les mêmes résultats de cuisson. La zone de cantonnement (14) n'augmente que faiblement l'encombrement global d'un dispositif de cuisson conforme à l'invention par rapport à une chambre de cuisson d'un four actuel.

Le dispositif de cuisson conforme à l'invention permet ainsi d'atteindre des résultats de cuisson inattendus avec des chambres de cuisson (1) présentant un volume interne réduit.

## Revendications

1. Dispositif de cuisson destiné notamment à la cuisson du pain, comportant :
- au moins une chambre de cuisson (1) délimitée par une sole (2), une voûte (3), deux parois latérales (4, 5), une paroi arrière (6) et un volet pivotant (19) mobile entre une position d'ouverture et une position de fermeture d'un accès frontal à la chambre de cuisson (1),
- des éléments chauffants (9) en sole (2) et en voûte (3), ladite voûte (3) comportant au moins un orifice d'évacuation (3b) des buées de cuisson,
- la sole (2) comportant une dalle de cuisson (7) sur laquelle sont disposés les produits destinés à la cuisson,
- une zone de cantonnement (14) des buées de cuisson dans laquelle débouche l'orifice d'évacuation (3b), ladite zone de cantonnement (14) étant localisée entre la voûte (3) et une paroi supérieure (12) située au-dessus de ladite voûte (3),
- et un parement minéral (3a, 4a, 5a) recouvrant à l'intérieur de la chambre de cuisson (1) au moins partiellement les parois latérales (4, 5) et la voûte (3),
**caractérisé en ce que** les éléments chauffants (9) sont des résistances électriques, les résistances de voûte (3) s'étendant sensiblement horizontalement dans le bas de la zone de cantonnement (14).

2. Dispositif selon la revendication 1, **caractérisé en ce que** la zone de cantonnement (14) comporte un moyen d'évacuation (17) des buées issues de la cuisson.

3. Dispositif selon la revendication 1 ou 2, **caractérisé en ce que** la paroi arrière (6) est également recouverte à l'intérieur de la chambre de cuisson (1) au moins partiellement avec un parement minéral (6a).

4. Dispositif selon l'une quelconque des revendications 1 à 3, **caractérisé en ce que** le parement minéral (3a) fixé en voûte (3) comporte un assemblage ou une juxtaposition de plaques modulaires, lesquelles cachent les éléments chauffants (9).

5. Dispositif selon l'une quelconque des revendications 1 à 4, **caractérisé en ce que** le parement minéral (3a, 4a, 5a, 6a) est constitué de fibrociment minéral.

6. Dispositif selon l'une quelconque des revendications 1 à 5, **caractérisé en ce que** la voûte (3) comporte une pluralité d'orifices d'évacuation (3b) débouchant dans la zone de cantonnement (14).

7. Dispositif selon la revendication 6, **caractérisé en ce que** les orifices d'évacuation (3b) sont agencés sous forme de passages à la périphérie de la voûte (3).

8. Dispositif selon les revendications 4 et 6, **caractérisé en ce que** les orifices d'évacuation (3b) sont agencés sous forme de passages à la périphérie des plaques modulaires du parement minéral (3a) en voûte (3).

9. Four comportant au moins un dispositif de cuisson conforme à l'une quelconque des revendications 1 à 8.

10. Four comportant plusieurs chambres de cuisson superposées, et au moins un dispositif de cuisson selon l'une quelconque des revendications 1 à 8.

## Claims

1. A baking device notably intended for baking bread, including:
- at least one baking chamber (1) delimited by a floor (2), an arch (3), two side walls (4, 5), a rear wall (6) and a pivoting trapdoor (19) mobile between an opening position and a closing position of a front access to the baking chamber (1),
- heating members (9) in the floor (2) and on the arch (3), said arch (3) including at least one discharge orifice (3b) for the baking vapors,
- the floor (2) including a baking slab (7) on which are positioned the products intended to be baked,
- an area (14) for confining the baking vapors, into which opens the discharge orifice (3b), said confinement area (14) being localized between the arch (3) and an upper wall (12) located above said arch (3),
- and mineral cladding (3a, 4a, 5a) inside the baking chamber (1) covering at least partly the side walls (4, 5) and the arch (3),
**characterized in that** the heating members (9) are electric resistors, the arch resistors (3) extending substantially horizontally in the lower portion of the confinement area (14).

2. The device according to claim 1, **characterized in that** the confinement area (14) includes a means (17) for discharging the vapors from the baking.

3. The device according to claim 1 or 2, **characterized in that** the rear wall (6) inside the baking chamber (1) is also covered at least partly with a mineral cladding (6a).

4. The device according to any of claims 1 to 3, **characterized in that** the mineral cladding (3a) attached in the arch (3) includes an assembly or a juxtaposition of modular plates, which conceal the heating members (9).

5. The device according to any of claims 1 to 4, **characterized in that** the mineral cladding (3a, 4a, 5a, 6a) consists of mineral asbestos cement.

6. The device according to any of claims 1 to 5, **characterized in that** the arch (3) includes a plurality of discharge orifices (3b) opening into the confinement area (14).

7. The device according to claim 6, **characterized in that** the discharge orifices (3b) are laid out as passages at the periphery of the arch (3).

8. The device according to claims 4 and 6, **characterized in that** the discharge orifices (3b) are laid out as passages at the periphery of the modular plates of the mineral cladding (3a) in the arch (3).

9. An oven including at least one baking device according to any of claims 1 to 8.

10. An oven including several superposed baking chambers, and at least one baking device according to any of claims 1 to 8.

## Patentansprüche

1. Backvorrichtung, insbesondere für das Backen von Brot, die aufweist:
- mindestens eine Backkammer (1), die durch einen Boden (2), ein Gewölbe (3), zwei Seitenwände (4, 5), eine Rückwand (6) und eine schwenkende Klappe (19), die zwischen einer Öffnungsstellung und einer Schließstellung eines frontalen Zugangs zur Backkammer (1) bewegbar ist,
- Heizelemente (9) am Boden (2) und am Gewölbe (3), wobei das Gewölbe (3) mindestens eine Ableitungsöffnung (3b) der Backdämpfe aufweist,
- wobei der Boden (2) eine Backplatte (7) aufweist, auf der die zum Backen bestimmten Produkte angeordnet sind,
- einen Sammelbereich (14) der Backdämpfe, in den die Ableitungsöffnung (3b) mündet, wobei der Sammelbereich (14) zwischen dem Gewölbe (3) und einer oberen Wand (12) lokalisiert ist, die sich über dem Gewölbe (3) befindet,
- und eine mineralische Verblendung (3a, 4a, 5a), die die Seitenwände (4, 5) des Gewölbes (3) im Inneren der Backkammer (1) mindestens teilweise bedeckt,
**dadurch gekennzeichnet, dass** die Heizelemente (9) elektrischen Widerstände sind, wobei sich die Gewölbewiderstände (3) etwa horizontal im unteren Teil des Sammelbereichs (14) erstrecken.

2. Vorrichtung nach Anspruch 1, **dadurch gekennzeichnet, dass** der Sammelbereich (14) ein Ableitungsmittel (17) der beim Backen entstehenden Dämpfe aufweist.

3. Vorrichtung nach Anspruch 1 oder 2, **dadurch gekennzeichnet, dass** die Rückwand (6) ebenfalls im Innern der Backkammer (1) mindestens teilweise mit einer mineralischen Verblendung (6a) bedeckt ist.

4. Vorrichtung nach einem der Ansprüche 1 bis 3, **dadurch gekennzeichnet, dass** die im Gewölbe (3) befestigte mineralische Verblendung (3a) eine Montage oder eine Aneinanderreihung modularer Platten aufweist, die die Heizelemente (9) verdecken.

5. Vorrichtung nach einem der Ansprüche 1 bis 4, **dadurch gekennzeichnet, dass** die mineralische Verblendung (3a, 4a, 5a, 6a) aus mineralischem Faserzement besteht.

6. Vorrichtung nach einem der Anspruche 1 bis 5, **dadurch gekennzeichnet, dass** das Gewölbe (3) eine Vielzahl von Ableitungsöffnungen (3b) aufweist, die in den Sammelbereich (14) münden.

7. Vorrichtung nach Anspruch 6, **dadurch gekennzeichnet, dass** die Ableitungsöffnungen (3b) in Form von Durchgängen an der Peripherie des Gewölbes (3) ausgebildet sind.

8. Vorrichtung nach den Ansprüchen 4 und 6, **dadurch gekennzeichnet, dass** die Ableitungsöffnungen (3b) in Form von Durchgängen an der Peripherie der modularen Platten der mineralischen Verblendung (3a) als Gewölbe (3) ausgebildet sind.

9. Ofen, der mindestens eine Backvorrichtung aufweist, die einem der Ansprüche 1 bis 8 entspricht.

10. Ofen, der mehrere übereinandergelagerte Backkammern und mindestens eine Backvorrichtung nach einem der Ansprüche 1 bis 8 aufweist.
